# FASCICULE DE BREVET EUROPEEN

(11) **EP 0 928 445 B1**
(45) Date de publication et mention de la délivrance du brevet: **22.01.2003**
(21) Numéro de dépôt: 98909566.6
(22) Date de dépôt: 19.02.1998
(51) Int. Cl.: G06F 1/00, H04L 29/06

(54) **PROCEDE D'ACCES CONDITIONNEL A UNE RESSOURCE INTERNET DEPUIS UN TERMINAL POURVU D'UN LECTEUR DE CARTE A MICROCIRCUIT**
VERFAHREN FÜR BEDINGTEN ZUGANG ZU EINEM INTERNETBETRIEBSMITTEL VON EINEM ENDGERÄT MIT CHIPKARTENLESER
METHOD FOR CONDITIONALLY ACCESSING AN INTERNET RESOURCE FROM A TERMINAL EQUIPPED WITH A MICROCIRCUIT READER CARD

(30) Priorité: 21.02.1997 FR 9702056
(43) Date de publication de la demande: 14.07.1999
(73) Titulaire: Netgem, Société Anonyme, 92400 Courbevoie (FR)
(72) Inventeur: HADDAD, Joseph, F-92200 Neuilly sur Seine (FR)
(74) Mandataire: Thévenet, Jean-Bruno
(86) Numéro de dépôt international: FR9800321
(87) Numéro de publication internationale: WO98037479

(56) Documents cités:
- US-A- 5 067 154
- US-A- 5 590 199
- US-A- 5 602 918

## Description

L'invention concerne l'accès aux ressources Internet.

Le document US-A-5 590 199 (KRAJEWSKI JR MARJAN ET AL, 31.12.1996) décrit un procédé pour établir automatiquement l'adresse d'un terminal dans un réseau, qui se base sur l'utilisation d'une carte magnétique et d'une base de données enregistrée sur un serveur. Le procédé contrôlle ainsi les accès au réseau. Comparé au procédé décrit dans US-A-5 590 199, la présente invention résout le problème de supporter l'accès conditionnel paramétrable et anonyme à une ressource Internet d'une façon économique.

Depuis la généralisation du réseau Internet, il est souvent apparu souhaitable de conditionner ou de contrôler les accès à tel ou tel site, notamment pour en réserver l'accès à des personnes autorisées, à en limiter l'accès selon certaines conditions, à conditionner l'accès au paiement préalable d'une somme, etc.

L'un des buts de l'invention est de proposer un procédé d'accès qui puisse répondre à ces objectifs, en permettant une adaptation à des cas de figures très variés, comme on l'expliquera par la suite, mais tout en conservant une excellente sécurité et un excellent contrôle des accès à la ressource Internet.

L'invention se base principalement sur l'utilisation d'une carte à microcircuit, remise à un utilisateur (de façon anonyme ou bien nominative) et que celui-ci insère dans un lecteur de carte dont est pourvu son terminal Internet.

Le terminal Internet peut être un micro-ordinateur doté d'un logiciel de navigation approprié sur le réseau Internet ainsi que d'un lecteur de carte à microcircuit, ou bien, avantageusement, un terminal dédié, sous forme d'un boîtier relié d'une part à un récepteur de télévision et d'autre part à une ligne téléphonique, pourvu de moyens pour entrer des commandes, par exemple par l'intermédiaire d'une télécommande infrarouge, et comportant un lecteur de carte à microcircuit.

Une telle configuration n'est cependant pas limitative, et diverses variantes peuvent être envisagées, telles que : terminal doté de son propre afficheur (en lieu et place du téléviseur), transmission par une voie autre qu'une ligne téléphonique, telle que réseau câblé, radiotéléphonie cellulaire (GSM), radiotéléphonie sur boucle locale, réception de données par satellite, etc.

Plus précisément, le procédé de l'invention comprend les étapes consistant à : insérer une carte de validation dans le terminal, cette carte comprenant au moins un identifiant de carte ; établir une connexion du terminal à un serveur de validation ; transmettre du terminal au serveur de validation l'identifiant de la carte ; rechercher, dans un fichier du serveur de validation, un ensemble de données relatives à la carte ; vérifier, au niveau du serveur de validation, la conformité de cet ensemble de données avec une série de critères prédéterminés, fonction de l'identifiant de la carte ; en cas de conformité, mettre à jour les données relatives à la carte et retourner au terminal des paramètres de connexion à une ressource Internet, ces paramètres étant fonction de l'identifiant de la carte ; établir une connexion du terminal à la ressource Internet en fonction des paramètres de connexion ainsi transmis au terminal.

Selon des caractéristiques avantageuses :
― l'ensemble de données relatives à la carte comprend le nombre de connexions à la ressource Internet déjà effectuées, et l'un des critères prédéterminés est le non-dépassement d'un nombre maximum de connexions ;
― l'ensemble de données relatives à la carte comprend la date de première connexion à la ressource Internet, et l'un des critères prédéterminés est le non-dépassement d'une durée maximale de péremption par rapport à cette date ;
― les paramètres de connexion à la ressource Internet retournés au terminal sont également fonction d'au moins certaines des données dudit ensemble de données relatives à la carte et conservées dans ledit fichier du serveur de validation ;
― la ressource Internet comporte en outre une messagerie, et la connexion à cette ressource Internet autorise l'accès à une boîte aux lettres, la carte de validation comprenant au moins une adresse de boîte aux lettres de cette messagerie.

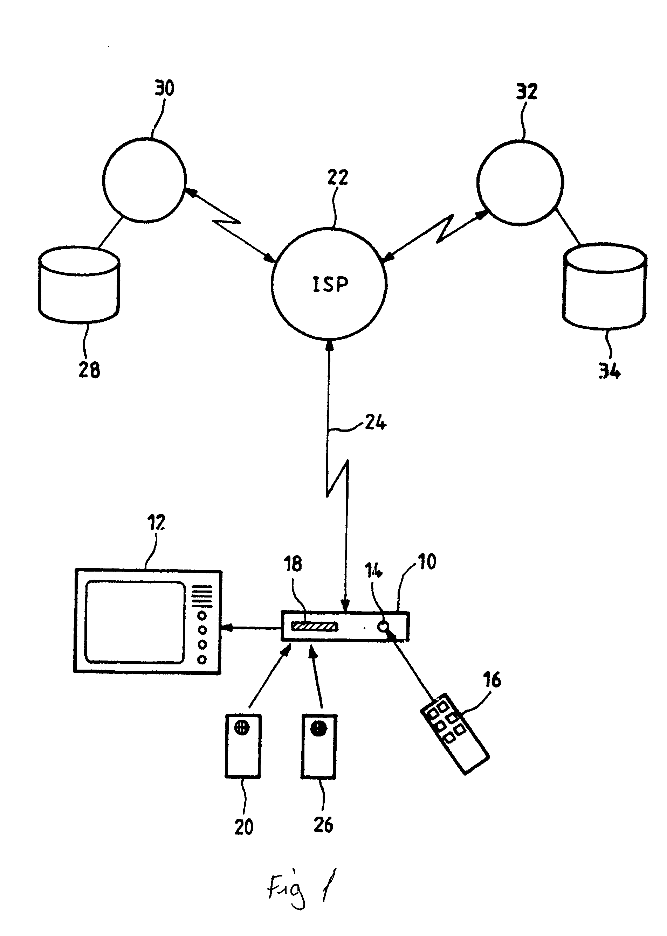

D'autres caractéristiques et avantages de l'invention apparaîtront à la lecture de la description détaillée ci-dessous d'un mode de mise en oeuvre du procédé de l'invention, en référence à la figure unique annexée, qui illustre les différents moyens et ressources indiqués dans la mise en oeuvre du procédé.

Dans l'exemple ci-dessous, on considérera un terminal Internet sous forme d'un boîtier 10 relié à un téléviseur 12 pour l'affichage des différentes données retournées par le réseau Internet, ce boîtier comportant, pour l'introduction de commandes de navigation, un récepteur 14 tel qu'un récepteur infrarouge piloté par une télécommande 16 à la disposition de l'utilisateur.

Ces boîtiers sont en eux-mêmes connus et ne seront pas décrits plus en détail ; leur fonctionnement propre est simplement modifié par ajout d'une couche logicielle spécifique pour la mise en oeuvre du procédé de l'invention.

L'application à un boîtier dédié n'est cependant pas limitative, et l'on pourrait aussi bien envisager, comme indiqué plus haut, d'utiliser un micro-ordinateur pourvu d'un logiciel de navigation approprié, avec lequel les données seraient affichées sur l'écran de visualisation et les commandes seraient introduites par un clavier.

Le terminal Internet 10 est pourvu d'un lecteur 18 de carte à microcircuit, comme cela est connu en soi, par exemple pour lire une carte 20 dont le microcircuit comprend les données de connexion au fournisseur d'accès Internet ou ISP (*Internet Service Provider*) 22 via le réseau téléphonique commuté 24.

Ces données de connexion sont mémorisées dans la carte, qui est par exemple adressée à l'utilisateur après souscription de l'abonnement au fournisseur ISP, avec le numéro téléphonique d'accès à l'ISP et les différents paramètres TCP/IP (protocole Internet) pour établir la communication avec ce dernier. Ces différents paramètres mémorisés dans la carte sont chargés dans une mémoire temporaire du boîtier 10 à la première introduction de la carte 20, de manière à rendre ce boîtier autonome, pour qu'il puisse se connecter au fournisseur ISP après retrait de la carte (on verra par la suite qu'il est nécessaire d'introduire une autre carte et donc de libérer le lecteur à cet effet).

Le procédé de l'invention repose sur l'utilisation d'une carte à microcircuit 26 (que l'on appellera par la suite "carte de validation"), distincte de la carte 20 d'abonnement au fournisseur ISP, et qui est remise à un utilisateur, ou achetée par celui-ci.

Bien que l'on puisse envisager une carte 26 nominative, le procédé de l'invention est essentiellement conçu pour une carte anonyme, c'est-à-dire non liée à un utilisateur particulier, et qui peut donc être librement distribuée ou revendue sans que l'utilisateur ait à justifier de son identité.

Cette carte est par exemple une carte à microcircuit à logique câblée synchrone du type Schlumberger "Eurochip". Ce type de carte est particulièrement avantageux en raison de son faible prix (du fait de la logique câblée) et de la possibilité qu'elle offre de cryptage des informations lors de l'échange de données avec l'extérieur, grâce à un algorithme de cryptage incorporé à la carte et activable sélectivement.

Les informations contenues dans cette carte peuvent être les suivantes :
― zone masquée figée, contenant des informations propres au fabricant ainsi qu'un identifiant de l'application selon l'invention (qui permet de reconnaître qu'il s'agit bien d'une "carte de validation" telle que définie ici et non d'une carte ayant une autre fonction) ;
― identifiant de carte ou "numéro de séquence", typiquement sur 48 bits, qui est un numéro propre à la carte, différent d'une carte à la suivante ;
― zone réservée à la mise en oeuvre du processus de cryptage des données, avec un code secret et un algorithme secret, non lisibles de l'extérieur et mis en oeuvre à l'intérieur du microcircuit de la carte ;
― un bit servant à indiquer si l'on souhaite ou non mettre en oeuvre l'échange sécurisé des données par cryptage des informations, ou si, au contraire, on peut se contenter de transmettre les informations en clair.

L'ensemble des cartes de validation qui ont été mises sur le marché est répertorié dans une base de données 28 d'un serveur 30 (que l'on appellera par la suite "serveur de validation") qui peut par exemple comprendre, pour chacune des cartes de validation émises, les rubriques suivantes :
― identifiant de la carte (qui sera la clé principale d'accès du fichier) ;
― adresse Internet (adresse URL) d'un site Internet correspondant à la carte en question (à chaque carte est associé un site Internet) ;
― mot de passe et numéro de compte ("login") pour l'accès à ce site Internet, ou bien "cookie", c'est-à-dire mot de passe non secret, permanent, autorisant l'accès à ce site ;
― informations d'usage telles que :

― date de la première connexion demandée au site Internet ;
― nombre de connexions effectuées à ce site par l'utilisateur ;
― nombre maximum de connexions autorisées à ce site ;
― durée de validité de la carte après la première connexion ;
― adresse d'un site Internet par défaut (c'est-à-dire d'un site où l'on enverra l'utilisateur si par exemple ses droits sont expirés) ;
― etc.

Le déroulement du processus est le suivant.

Tout d'abord, le boîtier 10 établit une connexion avec le fournisseur ISP 22, de manière en elle-même connue à partir du numéro d'appel de ce fournisseur et des paramètres TCP/IP nécessaires à l'établissement de la connexion.

On met alors en relation, via le fournisseur ISP, le boîtier 10 avec le terminal de validation 30, auquel on transmet l'identifiant de la carte 26 introduite dans le boîtier 10. Cet échange peut être réalisé soit de manière cryptée soit en clair, comme on l'a indiqué plus haut.

Le serveur de validation 30 explore alors sa base de données 28 pour rechercher les données relatives au numéro de carte qui lui a été transmis et, si les critères de conformité sont remplis (date de péremption non encore atteinte, nombre maximal de connexions non dépassé, etc.), il renvoie au boîtier 10, toujours via le fournisseur ISP 22, l'adresse d'une ressource Internet avec les différents paramètres de connexion nécessaires.

Ces données sont reçues et mémorisées par le boîtier 10, qui établit alors, toujours via le fournisseur ISP 22, une liaison avec le site Internet 32 dont il a ainsi reçu l'adresse, et peut alors poursuivre le dialogue directement avec ce dernier pour permettre la navigation dans la base de données correspondante 34, dont les différentes informations seront retournées au boîtier 10 et affichées sur le téléviseur 12.

Comme on peut le constater, le serveur de validation n'intervient que dans la phase préliminaire du procédé, lorsque le boîtier demande que lui soit retournée l'adresse du site Internet recherché. Une fois la connexion à ce dernier établie, le serveur de validation n'intervient plus, jusqu'à la tentative de connexion suivante avec cette même carte ou une autre de même nature.

De très nombreuses variantes sont envisageables.

Par exemple, il est possible de prévoir une allocation dynamique du site Internet, en faisant dépendre l'adresse du site, et donc le choix du site, d'un certain nombre de données relatives à la carte conservées dans la base de données 28. Par exemple, à la première connexion on pourra connecter le boîtier à un premier site, et le connecter à un autre site les fois suivantes. De même, en cas par exemple d'expiration des droits attachés à la carte, on pourra prévoir néanmoins de connecter l'utilisateur sur un site Internet, mais un site "par défaut" qui lui indiquera que ses droits sont épuisés et qu'il lui est nécessaire de se procurer une nouvelle carte.

On notera par ailleurs que le fournisseur ISP 22 peut, outre le numéro de carte, transmettre également au serveur de validation 30 une information d'identité de l'appelant, par exemple le numéro de compte de celui-ci auprès du fournisseur ISP. Cette information pourra être mémorisée dans la base de données 28, par exemple pour opérer ultérieurement des regroupements, en recherchant par exemple, pour un même numéro de compte, tous les serveurs auxquels un même boîtier a demandé un accès, de manière à définir un "profil" typique de l'utilisateur correspondant.

On notera à cet égard que le serveur de validation 30 et le fournisseur ISP 22 peuvent soit être physiquement et logiquement distincts, soit être regroupés en un seul et même site, le fournisseur ISP assurant alors la gestion de la validation des cartes.

Une autre utilisation possible de l'invention est la gestion d'une messagerie, par exemple une messagerie d'entreprise, la carte de validation 26 étant programmée de manière à conserver en mémoire une ou plusieurs adresses de boîte aux lettres électronique conservées dans le fichier 34 du serveur 32. Il suffira donc à l'utilisateur d'insérer la carte dans le lecteur pour accéder à la messagerie et par exemple lire les messages qui lui sont destinés.

On constate que l'invention permet de gérer de manière conditionnelle l'accès à une ressource Internet à partir d'une carte sans que cette carte ne contienne les paramètres d'accès à la ressource, donc sans risque de dissémination ou d'utilisation incontrôlée de cette adresse.

De même, ce procédé permet de réserver l'utilisation d'un boîtier à un seul et unique site Internet, ce qui est particulièrement avantageux dans le cadre de la protection des mineurs, lorsque l'on souhaite permettre à des enfants d'accéder à un ou plusieurs sites prédéterminés à l'exclusion de tout autre. A cet effet, le boîtier 10 peut être programmé, au moment de l'insertion de la carte d'abonné 20, pour ne pouvoir fonctionner que si une carte de validation 26 est insérée dans le lecteur de carte, et pour la seule ressource Internet correspondant à cette carte.

## Revendications

1. Un procédé d'accès conditionnel à une ressource Internet (32) depuis un terminal Internet (10) pourvu d'un lecteur (18) de carte à microcircuit, procédé comprenant les étapes consistant à :
― insérer une carte de validation (26) dans le terminal, cette carte comprenant au moins un identifiant de carte,
― établir une connexion du terminal à un serveur de validation (30),
― transmettre du terminal au serveur de validation l'identifiant de la carte,
― rechercher, dans un fichier (28) du serveur de validation, un ensemble de données relatives à la carte,
― vérifier, au niveau du serveur de validation, la conformité de cet ensemble de données avec une série de critères prédéterminés, fonction de l'identifiant de la carte,
― en cas de conformité, mettre à jour les données relatives à la carte et retourner au terminal des paramètres de connexion à une ressource Internet, ces paramètres étant fonction de l'identifiant de la carte,
― établir une connexion du terminal à la ressource Internet en fonction des paramètres de connexion ainsi transmis au terminal.

2. Le procédé de la revendication 1, dans lequel l'ensemble de données relatives à la carte comprend le nombre de connexions à la ressource Internet déjà effectuées, et l'un des critères prédéterminés est le non-dépassement d'un nombre maximum de connexions.

3. Le procédé de la revendication 1, dans lequel l'ensemble de données relatives à la carte comprend la date de première connexion à la ressource Internet, et l'un des critères prédéterminés est le non-dépassement d'une durée maximale de péremption par rapport à cette date.

4. Le procédé de la revendication 1, dans lequel les paramètres de connexion à la ressource Internet retournés au terminal sont également fonction d'au moins certaines des données dudit ensemble de données relatives à la carte et conservées dans ledit fichier du serveur de validation.

5. Le procédé de la revendication 1, dans lequel la ressource Internet comporte en outre une messagerie, et la connexion à cette ressource Internet autorise l'accès à une boîte aux lettres, la carte de validation comprenant au moins une adresse de boîte aux lettres de cette messagerie.

## Patentansprüche

1. Verfahren für den bedingten Zugriff auf eine Internet-Ressource (32) von einem internat-Terminal (10) aus, welches mit einem Mikroschaltungskarten-Lesegerät (18) ausgestattet ist, umfassend folgende Schritte:
- Einführen einer Gültigkeitskarte (26) in das Terminal, wobei die Karte mindestens eine Kartenkennung besitzt,
- Herstellen einer Verbindung von dem Terminal zu einem Gültigkeits-Server (30),
- Senden der Kartenkennung von dem Terminal zu dem Gültigkeitsserver,
- in einer Datei (28) des Gültigkeitsservers wird eine Gruppe von Daten bezüglich der Karte recherchiert,
- im Bereich des Gültigkeitsservers wird die Übereinstimmung dieser Gruppe von Daten mit einer Reihe vorbestimmter Kriterien, die eine Funktion der Kartenkennung sind, verifiziert,
- im Fall der Übereinstimmung werden die Daten bezüglich der Karte aktualisiert, und an das Terminal werden Parameter für die Verbindung mit einer Internet-Ressource zurückgeschickt, wobei diese Parameter eine Funktion der Kartenkennung sind,
- es wird eine Verbindung von dem Terminal zu der Internet-Ressource in Abhängigkeit der so zu dem Terminal gesendeten Verbindungsparameter hergestellt.

2. Verfahren nach Anspruch 1, bei dem die Gruppe von Daten bezüglich der Karte die Anzahl der bereits mit der Internet-Ressource erfolgten Verbindungen umfaßt, und eines der vorbestimmten Kriterien die Nicht-Überschreitung einer maximalen Anzahl von Verbindungen ist.

3. Verfahren nach Anspruch 1, bei dem die Gruppe von Daten bezüglich der Karte das Datum der ersten Verbindung mit der Internet-Ressource umfaßt, und eines der vorbestimmten Kriterien die Nicht-Überschreitung einer maximalen Verfallsdauer bezüglich dieses Datums ist.

4. Verfahren nach Anspruch 1, bei dem die Parameter der Verbindung mit der Internet-Ressource, die zu dem Terminal zurückgeschickt werden, ebenfalls eine Funktion von mindestens einigen der Daten der Datengruppe bezüglich der Karte sind, welche in der Datei des Gültigkeitsservers enthalten sind.

5. Verfahren nach Anspruch 1, bei dem die Internet-Ressource außerdem eine Beförderungseinrichtung enthält, und die Verbindung mit dieser Internet-Ressource Zugriff zu einem Briefkasten gestattet, wobei die Gültigkeitskarte mindestens eine Adresse des Briefkastens dieser Beförderungseinrichtung aufweist.

## Claims

1. A method of conditional access to an Internet resource (32) from an Internet terminal (10) provided with a microcircuit-card reader (18), method comprising the steps consisting in:
- inserting an authorization card (26) into the terminal, this card comprising at least one card identifier,
- establishing a connection from the terminal to an authorization server (30),
- transmitting the identifier of the card from the terminal to the authorization server,
- searching, in a file (28) of the authorization server, for a set of data relating to the card,
- verifying, at the level of the authorization server, the compliance of this set of data with a series of predetermined criteria, dependent on the identifier of the card,
- in case of compliance, updating the data relating to the card and returning parameters concerning connection to an Internet resource to the terminal, these parameters being dependent on the identifier of the card,
- establishing a connection from the terminal to the Internet resource as a function of the connection parameters thus transmitted to the terminal.

2. The method of Claim 1, in which the data set relating to the card comprises the number of connections already performed to the Internet resource, and one of the predetermined criteria is the nonexceeding of a maximum number of connections.

3. The method of Claim 1, in which the data set relating to the card comprises the date of first connection to the Internet resource, and one of the predetermined criteria is the nonexceeding of a maximum duration of expiry with respect to this date.

4. The method of Claim 1, in which the Internet resource connection parameters returned to the terminal are also dependent on at least some of the data of the said data set relating to the card and kept in the said file of the authorization server.

5. The method of Claim 1, in which the Internet resource furthermore comprises a messaging facility, and the connection to this Internet resource permits access to a mailbox, the authorization card comprising at least one mailbox address of this messaging facility.
